# EUROPÄISCHE PATENTSCHRIFT

(11) **EP 1 893 971 B1**
(45) Veröffentlichungstag und Bekanntmachung des Hinweises auf die Patenterteilung: **02.05.2012**
(21) Anmeldenummer: 06763730.6
(22) Anmeldetag: 14.06.2006
(51) Int. Cl.: G01N 1/28

(54) **LASER-MIKRODISSEKTIONSVERFAHREN UND VORRICHTUNG ZUR LASER-MIKRODISSEKTION**
LASER-MICRO-DISSECTION METHOD AND DEVICE FOR LASER-MICRO-DISSECTION
PROCEDE ET DISPOSITIF DE MICRODISSECTION LASER

(30) Priorität: 16.06.2005 DE 102005028062
(43) Veröffentlichungstag der Anmeldung: 05.03.2008
(73) Patentinhaber: Leica Microsystems CMS GmbH, 35578 Wetzlar (DE)
(72) Erfinder: WESNER, Joachim, 35633 Lahnau (DE)
(74) Vertreter: Kudlek & Grunert Patentanwälte
(86) Internationale Anmeldenummer: PCT/EP2006/063236
(87) Internationale Veröffentlichungsnummer: WO 2006/134142

(56) Entgegenhaltungen:
- DE-A1- 10 305 876
- DE-A1- 10 346 458
- DE-C1- 10 043 506

## Beschreibung

Die Erfindung betrifft ein Laser-Mikrodissektionsverfahren, mit dem ein Dissektat aus einer biologischen Probe, welche auf einem planaren Träger aufgebracht ist, mittels Laserpulsen eines Lasers entlang einer geschlossenen Schnittlinie ausgeschnitten wird.

Ferner betrifft die Erfindung eine Vorrichtung zur Laser-Mikrodissektion, die ein Mikroskop mit mindestens einem eine optische Achse definierenden Objektiv umfasst. Ferner ist ein gepulster Laser vorgesehen, der einen Laserstrahl aussendet, der über das Objektiv entlang der optischen Achse auf eine Probe gerichtet ist und eine geschlossene Schnittlinie beschreibt.

Mit Mikrodissektion wird im Bereich der Biologie und der Medizin ein Verfahren bezeichnet, mit dem aus einer im allgemeinen flachen Probe (beispielsweise Zellen, Zellkulturen oder ein Gewebeschnitt) ein kleines Stück, ein sogenanntes Dissektat, mit einem fokussierten Laserstrahl ausgeschnitten wird. Die biologische Probe wird für den Laserschnitt auf einem planaren Träger, beispielsweise einem Glasobjektträger oder einer Polymerfolie, aufgebracht. Das Dissektat steht nach dem Schnitt für weitere biologische oder medizinische (z.B. histologische) Untersuchungen zur Verfügung.

Ein solches Verfahren zur Laser-Mikrodissektion ist beschrieben in dem Artikel "Cell surgery by laser micro-dissection: a preparative method" von G. Isenberg, W. Bilser, W. Meier-Ruge, E. Remy, Journal of Microscopy, Vol. 107, May 1976, pp. 19-24. Dort ist eine biologische Probe an der Unterseite eines Objektträgers aufgebracht. Bei der biologischen Probe handelt es sich um Zellkulturen, die auf einem Objektträger angezogen wurden. Um eine feste Haftung dieser Zellen an dem Substrat zu verhindern, werden silikonbeschichtete Objektträger verwendet, welche eine Verringerung der Adhäsion zwischen Probe und Objektträger bewirken. Der Objektträger liegt in einem aufrechten Mikroskop, in das ein gepulster He-Ne-Laser eingekoppelt ist. Der Laserstrahl wird auf die biologische Probe fokussiert. Mit dem fokussierten Laserstrahl wird ein interessierender Probenbereich, das Dissektat, entlang einer geschlossenen Schnittlinie durch Aneinanderreihen von durch die Laserpulse erzeugten Schnittlöchern ausgeschnitten. Der Schnitt beruht dabei auf dem bekannten Prinzip der Laserablation, d.h. die einzelnen Laserpulse erzeugen in der Schnittlinie ein Plasma, welches das Probenmaterial "verdampft". Dabei trennt der letzte Laserpuls das Dissektat von der umgebenden biologischen Probe ab und bewirkt dabei auch die erforderliche Lockerung des Dissektats vom Objektträger. Dann fällt das Dissektat unter Einwirkung der Schwerkraft herab und wird in einem Sammelgefäß aufgefangen und weiteren Untersuchungen zugeführt.

Die DE 100 43 506 C1 beschreibt eine Weiterentwicklung dieses Verfahrens. Dabei werden die zu untersuchenden Proben, aus denen interessierende Probenbereiche herausgeschnitten werden sollen, auf sehr dünne Kunststoff-Folien präpariert. Die Dicke dieser Kunststoff-Folien liegt in der Größenordnung zwischen 1-2 µm. Als Material kommen PET-Folien und PEN-Folien in Frage. Die Probe wird in ein Mikroskop mit eingekoppeltem, gepulstem Laser eingelegt. Es wird ein Verfahren zur Laser-Mikrodissektion beschrieben, bei dem die Schnittlinie gegen Ende des Schnitts nicht vollständig geschlossen wird, sondern am Ende ein schmaler und zugleich stabiler Steg stehen bleibt. Dieser verhindert ein Wegklappen und Verdrehen der Folie mit dem interessierenden Probenbereich außerhalb der Fokusebene. Vor dem Durchtrennen des Stegs wird die Apertur des Laserstrahls mittels einer Blende vergrößert, ohne die Beobachtungsapertur des Mikroskops zu verändern. Durch die vergrößerte Laserapertur vergrößert sich die Schnittbreite des Laserstrahls. Zugleich wird die Position des Fokus des Laserstrahls unverändert an derselben Position relativ zur Probe gehalten. Der verbliebene Steg wird mit dann mit der erweiterten Laserapertur mit einem letzten, fokussierten, schneidenden Laserpuls durchtrennt. Nach Beendigung des Schnitts fällt die Probe unter Einwirkung der Schwerkraft herab und wird in einem Auffanggefäß gesammelt. Insgesamt hat es sich jedoch als gerätetechnisch aufwendig und zeitraubend erwiesen, vor dem letzten Laserpuls die Schnittlinie zu stoppen und die Blende für die Laserapertur umzuschalten, bevor die Schnittlinie mit dem letzten Laserpuls beendet wird. Auch die Festlegung eines geeigneten Reststegs und die Zuordnung einer passenden Laserapertur durch den Anwender erweist sich als nicht ganz einfach, so dass manchmal die Dissektate nicht ganz freipräpariert sind und der Schnitt wiederholt werden muss.

Außerdem wurde bei beiden Verfahren beobachtet, dass bei unveränderter Geräteeinstellung (Optik, Laserparameter, Fokuslage usw.) nacheinander ausgeschnittene Dissektate unterschiedlich weit seitlich wegdriften, wenn sie in die Auffangvorrichtung fallen. Diese Auffangvorrichtung kann beispielsweise ein Probenröhrchen sein, marktüblich als PCR-Tube bezeichnet. Die Folge ist dann, dass die Dissektate seitlich an der Innenwand des PCR-Tubes haften, anstatt bis zum Boden des Tubes zu fallen. Sie sind dann schlecht zu inspizieren, was für den Anwender, beispielsweise einen Pathologen, einen wesentlichen Arbeitsschritt vor der weiteren Bearbeitung der ausgeschnittenen Dissektate darstellt.

Daher schlägt die deutsche Patentanmeldung DE 103 46 458 ein Verfahren zur Laser-Mikrodissektion eines interessierenden Probenbereichs einer Probe vor, bei dem ebenfalls die Laserpulse eines gepulsten Laserstrahls auf die Probe fokussiert werden, und bei dem die beim letzten, den Schnitt vollendenden Laserpuls ablatierte Masse an die Schnittbreite des letzten schneidenden Laserpulses angepasst und optimiert wird, so dass die vom Plasma auf das Dissektat übertragene Energie maximal wird. Allerdings wird auch hier der Stop der Schnittlinie vor dem letzten Laserpuls vom Anwender als zeitraubend empfunden.

Das US-Patent 6,773,903 offenbart ebenfalls ein Verfahren zur Mikrodissektion, beim dem ausgewählte Bereiche von einer biologischen Probe ausgeschnitten werden. Die auf den Objektträger aufgebrachte Probe liegt auf einem in der x-y-Koordinatenebene beweglichen Tisch. In das Mikroskop wird ein Laserstrahl eingekoppelt und der x-y-Tisch entsprechend bewegt, so dass dieser Laserstrahl um den interessierenden Probenbereich eine entsprechend geschlossene Schnittlinie beschreibt. Dadurch wird das interessierende biologische Material von der biologischen Probe getrennt. Die Steuerung des x-y-Tisches ist jedoch mechanisch aufwendig und nicht so genau als würde der Laserstrahl in der x-y-Ebene entsprechend gesteuert, um das biologische Material vom Rest der Probe zu trennen.

Es ist daher Aufgabe der Erfindung, ein Verfahren zur Laser-Mikrodissektion anzugeben, welches ein komfortableres und zügigeres Ausschneiden des Dissketats mit weiter verbesserten Schnittergebnissen auch bei schwieriger Probenpräparation erlaubt.

Diese Aufgabe wird gelöst durch ein Laser-Mikrodissektionsverfahren mit den Merkmalen des Anspruchs 1.

Eine weitere Aufgabe der Erfindung ist, eine Vorrichtung zur Laser-Mikrodissektion anzugeben, mit der der Benutzer sicher, schnell und zuverlässig die gewünschten Dissektate gewinnen kann. Dabei ist das Gewinnen der Dissektate unabhängig von der jeweiligen Probenpräparation.

Diese Aufgabe wird durch eine Vorrichtung zur Laser-Mikrodissektion gelöst, die die Merkmale des Anspruchs 10 umfasst.

Bei dem erfindungsgemäßen Laser-Mikrodissektionsverfahren wird ein Dissektat aus einer biologischen Probe mittels Laserpulsen eines Laserstrahls ausgeschnitten. Dabei wird der Laserstrahl entlang einer geschlossenen Schnittlinie geführt. Die Probe selbst ist auf einem planaren Träger aufgebracht. Während des Ausschneidens des Dissektats werden Parameter, die die Laserpulse und die Schnittlinie bestimmen, entlang der geschlossenen Schnittlinie kontinuierlich verändert.

Die kontinuierliche Veränderung der Parameter entlang der geschlossenen Schnittlinie wird durch Bildverarbeitung bestimmt. Aus der Bildverarbeitung werden die Größen für die kontinuierliche Veränderung der Parameter entlang der geschlossenen Schnittlinie gewonnen. Diese Parameter sind z. B. die Probendicke, die Textur der Probe, die Verteilung der Färbung innerhalb der Probe usw.

Es ist ebenso denkbar, dass die Parameter, die die Laserpulse und die geschlossene Schnittlinie bestimmen, lediglich vor einem Schließen der geschlossenen Schnittlinie kontinuierlich verändert werden. Während des Rests des Schneidens der Probe bleiben die Parameter konstant.

Mittels eines Sliders auf einem User-Interface können die Parameter, die die kontinuierliche Veränderung vor dem Schließen der geschlossenen Schnittlinie bestimmen, verändert werden.

Mittels einer zentralen Recheneinheit werden die Parameter ermittelt, wobei von der zentralen Recheneinheit entsprechende Steuersignale an die einzelnen Elemente eines optischen Systems geliefert werden.

Die Laserpulse durchlaufen, bevor sie auf die biologische Probe treffen, das optische System, wobei die Parameter der Laserpulse hinsichtlich einer Apertur, einer Abschwächung, einer Dichte der einzelnen Laserpunkte in der Schnittlinie und einer Fokuslage der Laserpulse verändert werden.

Die Apertur und der Abschwächer werden gleichzeitig variiert. Die Variation der Apertur und des Abschwächers erfolgt synchron zu den Laserpulsen, um dadurch höchste Schnittgeschwindigkeit zu erzielen. Die Variation der Apertur kann mittels einer Lochblende oder einer Irisblende durchgeführt werden.

Die Dichte der einzelnen Laserpunkte innerhalb einer Schnittlinie kann hinsichtlich der jeweiligen Laserleistung und der lokalen Eigenschaften der Probe angepasst werden.

Die erfindungsgemäße Vorrichtung zur Lasermikrodissektionumfasst ein Mikroskop mit mindestens einem eine optische Achse definierenden Objektiv. Ebenso ist ein gepulster Laser vorgesehen, der einen Laserstrahl aussendet, der über das Objektiv entlang der optischen Achse auf eine Probe gerichtet ist. Der Laserstrahl beschreibt auf der Probe eine geschlossene Schnittlinie, um dadurch einen ausgewählten Bereich der Probe von dem Rest des umgebenden biologischen Materials zu trennen. Alle in der optischen Achse angeordneten Elemente, die die Parameter der Laserpulse und der Schnittlinie bestimmen, sind an eine zentrale Recheneinheit angeschlossen.

Die zentrale Recheneinheit erzielt mittels Bildverarbeitung eine kontinuierliche Veränderung der Parameter entlang der geschlossenen Schnittlinie durch eine abgestimmte Verstellung der einzelnen Elemente.

Die zentrale Recheneinheit kann dabei ebenso verwendet werden, dass die zentrale Recheneinheit die Parameter, die die Laserpulse und die Schnittlinie bestimmen, lediglich vor einem Schließen der geschlossenen Schnittlinie kontinuierlich verändert werden.

Die Elemente, die die Parameter der Laserpulse und der Schnittlinie bestimmen, sind eine X/Y-Verschiebeeinheit, eine Apertureinheit, eine Abschwächereinheit, eine Fokussiereinheit, ein UV-Laser und eine Ablenkeinheit. Die zentrale Recheneinheit liefert dabei entsprechende Verstellsignale an die jeweiligen Elemente.

Ebenso ist mit der Vorrichtung zur Laser-Mikrodissektion ein Monitor verbunden, an dem dem Benutzer ein User-Interface dargestellt wird. Das User-Interface stellt einen Slider dar, mit dem die kontinuierliche Veränderung der Parameter, vor dem Schließen der geschlossenen Schnittlinie, bestimmt werden kann. Die zentrale Recheneinheit variiert dabei gleichzeitig die Apertur und den Abschwächer.

Weitere vorteilhafte Ausgestaltungen der Erfindung können dabei den Unteransprüchen entnommen werden.

Die Erfindung wird nachfolgend anhand der schematischen Zeichnungen genauer beschrieben. Es zeigen:
- Fig. 1: eine Vorrichtung zum Laserschneiden mit einem feststehenden Laserstrahl;
- Fig. 2: eine Vorrichtung zum Laserschneiden mit einem beweglichen Laserstrahl;
- Fig. 3: die Parameterzusammenstellung gemäß dem Stand der Technik, bei dem die Parameter bis zum Beenden der Schnittlinie konstant bleiben;
- Fig. 4: eine Parameterzusammenstellung gemäß dem Stand der Technik, bei dem vor Ende des vollkommenen Ausschneidens einer Probe die Parameter sprunghaft verändert werden;
- Fig. 5: eine kontinuierliche Veränderung der Parameter entlang einer geschlossenen Schnittlinie;
- Fig. 6: eine kontinuierliche Veränderung der Parameter vor der Beendigung der Schnittlinie;
- Fig. 7: eine schematische Darstellung einer Schnittlinie, bei der die Parameter kontinuierlich während der gesamten Schnittlinie verändert werden;
- Fig. 8: eine schematische Darstellung der Schnittlinie, bei der die Parameter erst vor Beendigung der Schnittlinie verändert werden;
- Fig. 9: die Gesamtwirkung der Veränderung der Apertur **A** und des Abschwächers **K**;
- Fig. 10: eine optimierte Gesamtwirkung aus der Veränderung der Apertur **A** und des Abschwächers **K**;
- Fig. 11: Schnittlinien, bei denen die Aperturblende und der Abschwächer gemeinsam verstellt worden sind;
- Fig. 12: beispielhaft die Einschränkungen der möglichen Kombinationen eines Abschwächers mit Dynamikbereich 40:1 mit einer Aperturblende des gleichen Dynamikbereichs;
- Fig. 13: beispielhaft Steuerkurven für Abschwächer und Apertur, die durchaus nicht nur auf Verläufe mit monotoner Variation der Krümmung beschränkt sind;
- Fig. 14: eine typische Eichkurve in Abhängigkeit von der Winkelstellung des Abschwächers;
- Fig. 15: eine Linearisierung der Charakteristik des Abschwächers aus einem vorgegebenen Steuerwert;
- Fig. 16: schematisch beispielhaft eine Programmschleife zum Erzeugen einer Schnittlinie; und
- Fig. 17: Darstellung eines Ausschnitts aus einem Userinterface, über das mittels eines Sliders die kontinuierliche Veränderung der Parameter vor dem Schließen der geschlossenen Schnittlinie eingestellt wird.

In den Figuren sind gleiche Elemente mit denselben Bezugsziffern bezeichnet.

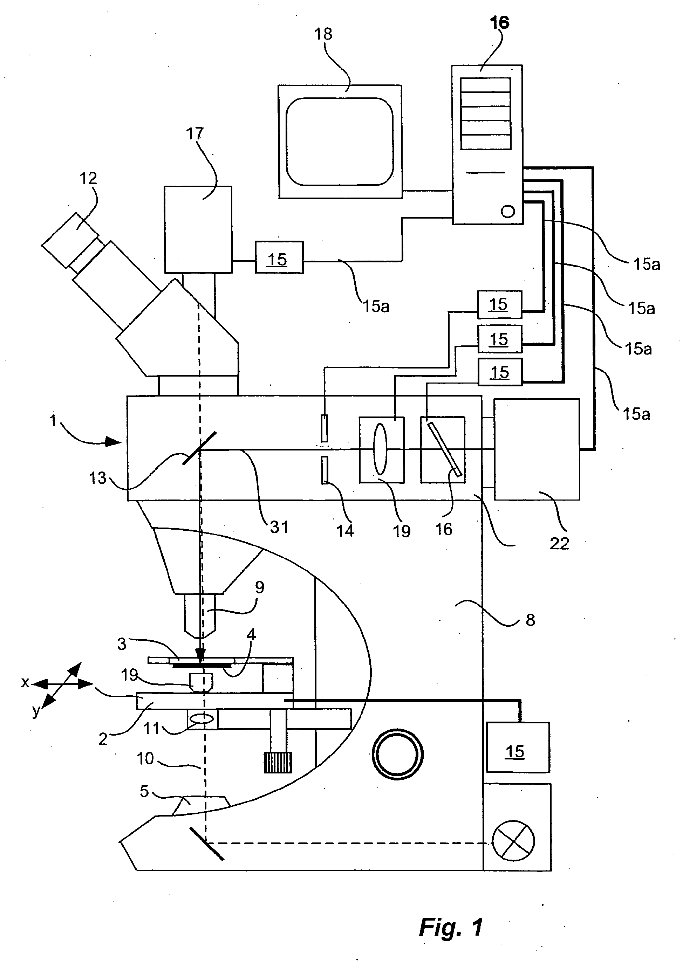

In **Figur 1** ist eine Vorrichtung zur Mikrodissektion dargestellt, welche mit einem feststehenden Laserstrahl und einer relativ dazu bewegten Probe 4 arbeitet. Die Vorrichtung umfasst ein Mikroskop 1 mit einem motorisch verfahrbaren x-y-Tisch 2. Der x-y-Tisch 2 dient zur Aufnahme eines Probenhalters 3, auf dem eine zu untersuchende bzw. zu schneidende Probe 4 aufgebracht ist. Ferner ist ein Beleuchtungssystem 5 vorgesehen, mit dem die Probe 4 zur visuellen Beobachtung durch den Benutzer über ein Okular 12 möglich ist. Zum Schneiden der Probe 4 ist ein Laserstrahl 22 vorgesehen, der in die optische Achse 10 des Mikroskops eingekoppelt wird. Der von dem Laser 22 erzeugte Laserstrahl 31 wird auf die Probe 4 zum Schneiden fokussiert. Der x-y-Tisch 2 ist mit einer Steuereinheit 15 verbunden, die den x-y-Tisch 2 derart bewegt, dass die gewünschte Schnittlinie erzeugt wird. Durch die Relativbewegung zwischen dem Laserstrahl 31 und der Probe 4 wird dann der entsprechende Probenteil aus der Probe mittels der gewünschten Schnittlinie ausgeschnitten. Bei dem in Figur 1 dargestellten Mikroskop handelt es sich um ein Durchlichtmikroskop, bei dem das Beleuchtungssystem 5 an einem Mikroskopstativ 8 unterhalb des x-y-Tisches 2 und der Probe 4 angeordnet ist. Das Mikroskop 1 umfasst mindestens ein Objektiv 9, das oberhalb des x-y-Tisches 2 und der Probe 4 angeordnet ist. Das Objektiv definiert eine optische Achse 10, die mit der optischen Achse des Beleuchtungssystems 5 fluchtet. In dieser beschriebenen Anordnung wird die Probe 4 mit einer Durchlichtbeleuchtung betrachtet. Das Laserschneiden könnte ebenso auch mit einem inversen Mikroskop ausgeführt werden, bei dem das Beleuchtungssystem 5 oberhalb des x-y-Tisches 2 und das mindestens eine Objektiv unterhalb des x-y-Tisches 2 angeordnet ist. Das vom Beleuchtungssystem 5 ausgehende Licht wird durch einen Kondensor 11 von unten auf den auf dem x-y-Tisch 2 angeordneten Probenhalter 3 mit der Probe 4 gerichtet. Das die Probe 4 durchdringende Licht gelangt zum Objektiv 9 des Mikroskops 1. Innerhalb des Mikroskops wird das Licht über nicht dargestellte Linsen und Spiegel dem mindestens einen Okular 12 zugeführt. Ebenso ist mit dem Mikroskop 1 eine Kamera 17 verbunden, die in Abhängigkeit von der Vergrößerung des Objektivs einen Bildausschnitt der Probe 4 aufnimmt. Die von der Kamera aufgenommenen Bilddaten werden an eine Recheneinheit 16 weitergegeben, die ihrerseits mit einem Monitor 18 verbunden ist, auf dem dem Benutzer ein Bild des aufgenommenen Probenbereichs dargestellt werden kann. Zwischen der Kamera und der Recheneinheit ist ebenfalls eine Steuereinheit 15 dazwischengeschaitet. Der vom Laser 22 ausgehende Laserstrahl 31 wird über einen Strahlteiler 13, wie z. B. einen dichromatischen Teiler, in den Strahlengang 10 des Mikroskops eingekoppelt. Bevor der Laserstrahl 31 in den Strahlengang des Mikroskops 1 eingekoppelt wird, durchläuft dieser ein optisches System, in dem mehrere Elemente 14, 16 und 19 vorgesehen sind. Das erste Element im optischen System ist eine Apertureinheit 14, die mit einer Steuereinheit 15 verbunden ist, die ihrerseits wiederum an die Recheneinheit 16 angeschlossen ist. Die Apertureinheit 14 kann eine Irisblende oder eine Auswahl von mehreren unterschiedlichen Lochblenden umfassen. Das zweite Element 19 im optischen System 30 ist eine Fokuseinheit 19, die ihrerseits ebenfalls mit einer Steuereinheit 15 verbunden ist, die ebenfalls an die Recheneinheit 16 angeschlossen ist. Die Fokuseinheit 19 dient hauptsächlich zum Ausgleich der unterschiedlichen Fokuslagen im Ultraviolett der hauptsächlich im sichtbaren Spektralbereich korrigierten Objektive 9 des Mikroskops 1. Alternativ kann mit der Fokuseinheit 19 auch die Auswahl einer bestimmten Fokusposition bzw. eine kontinuierliche Veränderung der Fokusposition des Laserfokus während des Schneidvorgangs erfolgen. Das dritte Element 16 im optischen System 30 ist eine Abschwächereinheit 16. Die Abschwächereinheit 16 ist ebenfalls mit einer separaten Steuereinheit 15 verbunden, die wiederum an die Recheneinheit angeschlossen ist. Der Laserstrahl 31 wird von einem UV-Laser 22 erzeugt, der in das optische System 30 eingeführt wird. Der UV-Laser 22 ist ebenfalls mit der Recheneinheit 16 verbunden.

Die Abschwächereinheit 16 kann in der Winkelposition verändert werden, und die Abschwächung basiert auf dem Prinzip der Interferenz. Die Apertureinheit 14, die Fokuseinheit 19 und die Abschwächereinheit 16 können alle durch Steuersignale von den individuellen Steuereinheiten 15 in ihrer Position bzw. Lage oder Größe verändert werden. Die Veränderung erfolgt dabei motorisch. Die Apertureinheit 14, die Fokuseinheit 19 oder der Abschwächereinheit 16 ist mit der individuellen Steuereinheit 15 verbunden, die ihrerseits über eine individuelle Rückmeldeleitung 15ä an die Recheneinheit 16 angeschlossen ist. Die Apertureinheit 14, die Fokuseinheit 19 und die Abschwächereinheit 16 können dabei unabhängig voneinander verstellt werden. Aufgrund der unabhängigen Verstellung der Apertureinheit 14 und der Abschwächereinheit 16 erreicht man in Kombination einen maximalen Dynamikbereich (Variationsbreite der Laserleistung in der Probe), und unabhängig davon kann man gezielt die Größen wie Tiefenschärfe, Auflösung und Leistungsdichte beeinflussen. Mit dem in das optische System 30 eingekoppelten Laserstrahl 31, der über einen Strahlteiler in den Strahlengang 10 des Mikroskops 1 eingespiegelt wird, wird mit einzelnen Laserpulsen die Probe 4 geschnitten. Ein optimales Schnittergebnis im Sinne der Erfindung verlangt aber die Synchronisation der Laserpulse mit den Veränderungen von sowohl der Apertureinheit 14, der Abschwächereinheit 16 und der Fokuseinheit 19, wobei auch die Bewegungen des x-y-Tisches 2 zu berücksichtigen sind.

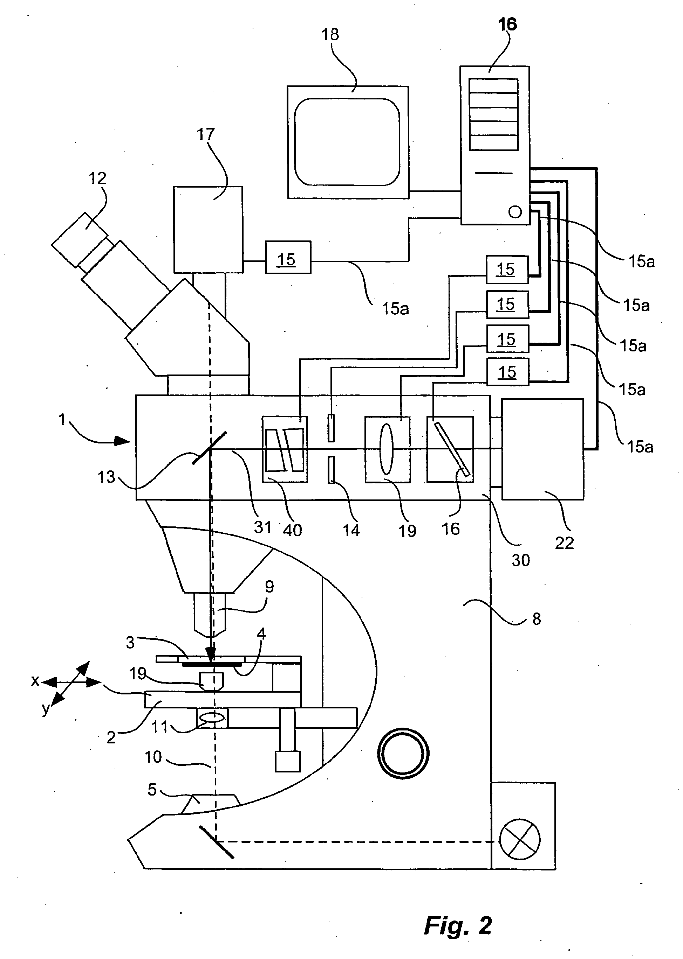

**Figur 2** zeigt eine Vorrichtung zur Laser-Mikrodissektion, bei der der x-y-Tisch feststeht und der Laserstrahl durch eine Ablenkeinheit 40, die ebenfalls im optischen System 30 angeordnet ist, in der entsprechenden Weise abgelenkt wird, um ein Dissektat beliebiger Form aus der Probe 4 auszuschneiden. Der x-y-Tisch 2 ist in dieser Anordnung während des Schneidevorgangs nicht beweglich. Im optischen System 30 ist in Richtung des vom Laser 22 ausgehenden Laserstrahls zunächst die Abschwächereinheit 16, dann die Fokuseinheit 19, dann die Apertureinheit 14 und schließlich die Ablenkeinheit 40 angeordnet. Die Ablenkeinheit 40 ist mit einer individuellen Steuereinheit 15 verbunden, die ihrerseits über eine Rückmeldeleitung 15a mit der Recheneinheit 16 verbunden ist. Die Ablenkeinheit 40 besteht aus einem Keilplattenpaar, das durch die Steuereinheit 15 in Verbindung mit der Recheneinheit 16 in geeigneter Weise verschoben werden kann, damit der Laserstrahl auf der Probe die gewünschte Form beschreibt, die das ausgeschnittene Dissektat letztendlich haben soll. Wie bereits in der Beschreibung zu Figur 1 erwähnt, sind alle Elemente des optischen Systems 30 jeweils mit einer individuellen Steuereinheit 15 verbunden, die über eine Rückmeldeleitung 15a an die Recheneinheit 16 angeschlossen sind.

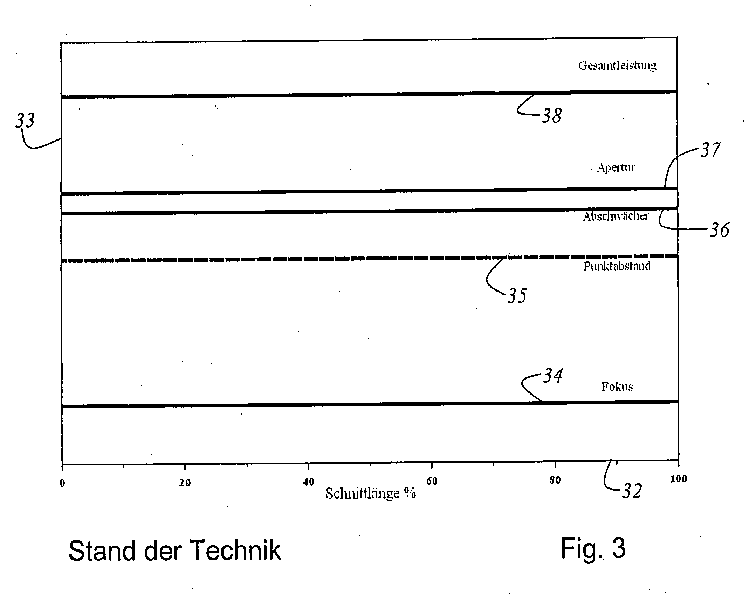

**Figur 3** zeigt den Parametersatz, wie er bei einem Schneideverfahren für Dissektate gemäß dem Stand der Technik Verwendung findet. Auf der Abszisse ist die Schnittlänge in Prozent aufgetragen. Dabei bedeuten 0 Prozent der Beginn des Schnitts und 100 Prozent das Ende des Schnitts. Auf der Ordinate 33 sind die einzelnen Parameterwerte in Abhängigkeit von der Schnittlänge in willkürlichen Einheiten aufgetragen. Alle Parameter, wie z. B. Fokus 34, Punktabstand 35, Abschwächer 36 und Apertur 37 sind über die gesamte Schnittlänge konstant. Die Gesamtleistung 38, die sich aus dem Zusammenspiel von Abschwächer 36 und Apertur 37 ergibt, ist somit ebenfalls über die gesamte Schnittlänge konstant.

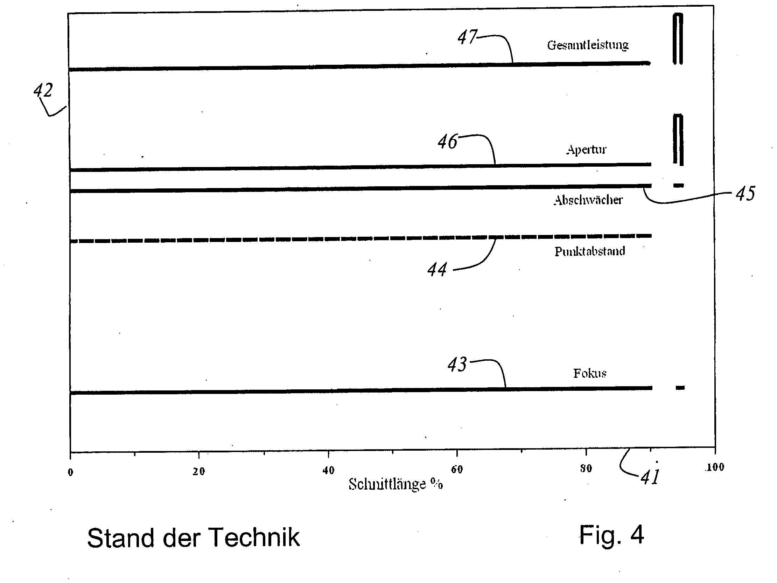

**Figur 4** beschreibt ebenfalls die Parameterzusammensetzung während eines Schneideprozesses eines Dissektats gemäß dem Stand der Technik. Auf der Abszisse 41 ist ebenfalls Schnittlänge in Prozent aufgetragen, und auf der Ordinate 42 ist der Wert der Parameter in willkürlichen Einheiten dargestellt. Über fast die gesamte Schnittlänge ist der Fokus 43, der Punktabstand 44, der Abschwächer 45 und die Apertur 46 konstant. Wie bereits in Figur 3 beschrieben, ergeben die Parameter des Abschwächers 45 und die Parameter der Apertur 46 eine Gesamtleistung 47, die somit ebenfalls bis kurz vor Beendigung der Schnittlinie konstant ist. Kurz vor Beendigung der Schnittlänge bzw. Schnittlinie legt das System eine kurze Pause ein, in der der Parameter der Apertur 46 verändert wird. Die Apertur wird somit vor Beendigung der Schnittlinie vergrößert. Folglich ändert sich somit auch die Gesamtleistung, welche aufgrund der größeren Apertur somit auch größer wird. Die anderen Parameter, wie z. B. Abschwächer 45 und Fokus 43, bleiben dabei konstant.

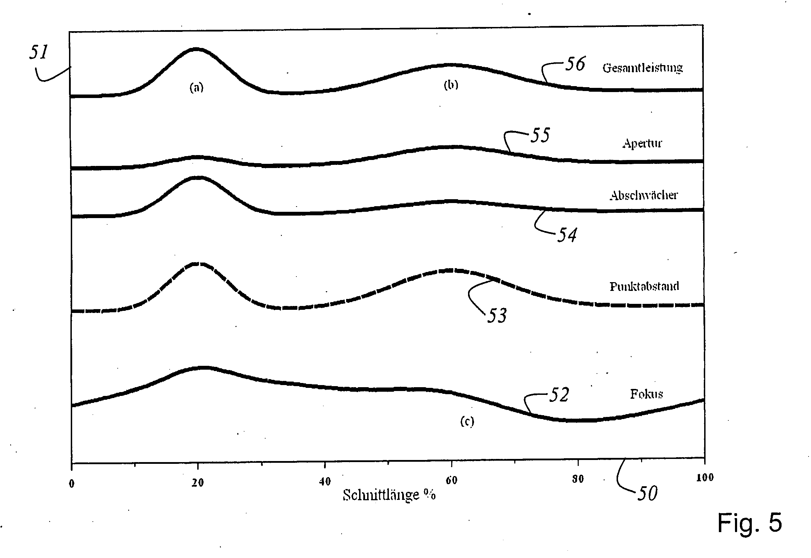

**Figur 5** zeigt einen Parametersatz, der sich kontinuierlich über die gesamte Schnittlänge verändert. Auf der Abszisse 50 ist die Schnittlänge in Prozent aufgetragen, und auf der Ordinate 51 sind die sich kontinuierlich verändernden Werte der einzelnen Parameter aufgetragen. Wie aus der Figur 5 ersichtlich, verändern sich die Parameter des Fokus 52, des Punktabstandes 53, des Abschwächers 54, der Apertur 55 und somit auch die Gesamtleistung 56 über die gesamte Schnittlänge. Eine Veränderung der Fokuslage ist notwendig, um eine Schieflage der Probe auszugleichen oder um den Fokus an unterschiedliche Dicken der Probe anzupassen. Ebenso kann mit dem sich ändernden Fokus die Auswahl einer bestimmten z-Lage bzw. eine kontinuierliche Variation der z-Position des Laserfokus während des Schnittvorgangs bzw. des Erzeugens einer Schnittlinie erfolgen. Die Schnittlinie wird durch eine Aneinanderreihung einzelner Laserpulse erzeugt. Dabei ist es wichtig, dass sich die Punkte gegenseitig berühren, um dadurch eine Schnittlinie zu erzeugen, die das Dissektat von der restlichen Probe 4 abtrennt. Hierzu kann, wie in Figur 5 dargestellt, ebenfalls der Punktabstand der einzelnen Laserpulse innerhalb der Schnittlinie verändert werden. Ein veränderter Punktabstand bedeutet, dass sich der Durchmesser des einzelnen Laserpulses während der Erzeugung der Schnittlinie ändern kann. Ebenso ergibt sich aus dem Zusammenspiel der Apertur 55 und dem Abschwächer 54 eine sich kontinuierlich ändernde Gesamtleistung 56, die durch den Laserpuls auf die Probe 4 eingetragen wird. Bei dem in Fig. 5 beschriebenen Fall werden die Größen Gesamtleistung 56, Apertur 55, Abschwächer 54, Punktabstand 53, als auch die Fokuslage 52 kontinuierlich und synchron zu den Laserpulsen verändert, um eine möglichst zuverlässige Ablösung bei gleichzeitig optimierter Schneidgeschwindigkeit zu erreichen. Schätzwerte für diese Parameter können z. B. durch Auswertung der optischen Dichte im vollen oder in bestimmten Spektralbereichen bzw. Farbkanälen bestimmt werden als auch durch "Eineichen" des Verfahrens auf das Probenmaterial, also durch Schneidversuche in einem sonst nicht benutzen Teil der Probe. Dabei besteht die zusätzliche Freiheit, gleiche Lasergesamtleistungen durch unterschiedliche Einstellungen von Abschwächer und Aperturblende zu erreichen und so selektiv je nach Abschnitt der Schneidlinie beispielhaft bei (a) oder (b) entweder die Tiefenschärfe (kleine Apertur) oder die Leistungsdichte im Fokus (große Apertur) zu optimieren. Über Kontrastauswertung des Mikroskopbildes in verschiedenen Fokuslagen können auch eine eventuelle Krümmung und eine allgemeine Neigung des Präparats zur optischen Achse bestimmt werden (c) und im Rahmen der vorgestellten Erfindung simultan zu den Laserpulsen und somit ohne Verringerung der Schnittgeschwindigkeit variiert werden. Optional werden dann z. B. durch Auswertung der optischen Dichte **d** im vollen oder in bestimmten Spektralbereichen bzw. Farbkanälen oder auch mit Hilfe anderer Verfahren Schätzwerte für die Schneideigenschaften des Probenmaterials entlang der vorgegebenen Schneidkurven I bzw. **Iᵢ** bestimmt. Aufgrund der so abgeschätzten optischen Dichte **d** wird zusammen mit Benutzerangaben über die Art des Proben- oder Trägermaterials **x** ein Verlauf der Schnittparameter wie gesamte Laserleistung **P** (siehe unten), Apertur **A**, Abschwächer **K**, Punktdichte **D** und evtl. auch Fokuslage z entlang **I** ermittelt und für den nachfolgenden Schneidprozess abgespeichert. Denkbar sind hier zur Vereinfachung der Bedienung auch einige vorgegebene einparametrige Funktionen (**P, D, z**) = **fₓ(d)** oder auch (**A, K, D, z**) = **fₓ(d)**. Alternativ können die besten Schneidparameter auch durch "Eineichen" des Verfahrens auf das Probenmaterial, also durch Schneidversuche in einem sonst nicht genutzten Teil der Probe 4 bestimmt werden.

Über Kontrastauswertung des Mikroskopbildes in verschiedenen Fokuslagen können auch eine eventuelle Krümmung und eine allgemeine Neigung des Präparats bzw. Probe 4 zur optischen Achse 10 bestimmt werden und im Rahmen der vorgestellten Erfindung simultan zu den Laserpulsen und somit ohne Verringerung der Schnittgeschwindigkeit variiert werden.

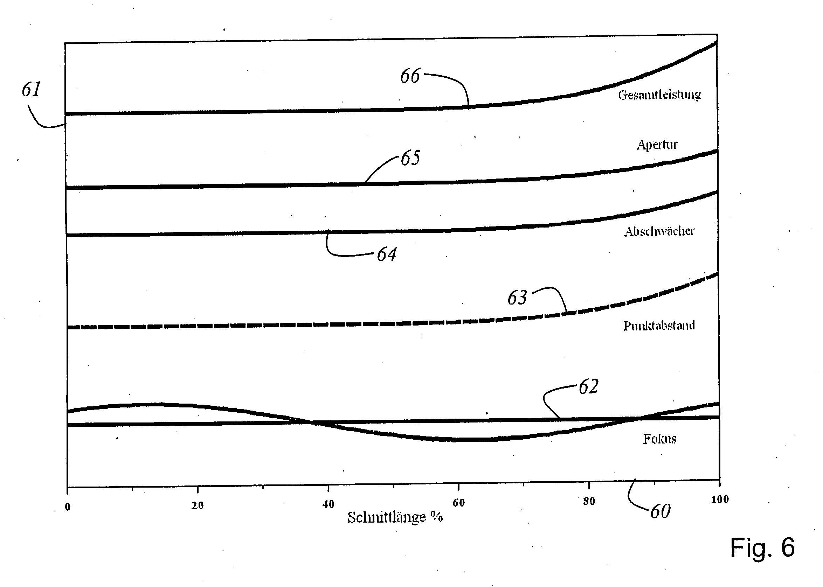

**Figur 6** beschreibt die Situation, dass kurz vor Beendigung der Schnittlinie einige Parameter kontinuierlich geändert werden. Auf der Abszisse 60 ist die Schnittlänge in Prozent aufgetragen und auf der Ordinate 61 sind die Werte der einzelnen Parameter in willkürlichen Einheiten dargestellt. Die sich ändernden Parameter sind der Fokus 62, der Punktabstand 63, der Abschwächer 64, die Apertur 65 und die Gesamtleistung 66. Der Fokus 62 kann dabei während der gesamten Schnittlinie konstant bleiben oder sich über die gesamte Schnittlinie hinweg kontinuierlich ändern. Für die restlichen Parameter, wie Punktabstand 63, Abschwächer 64, Apertur 65 und folglich die Gesamtleistung 66 nimmt deren Parameterwert ab ca. 60 Prozent der beendeten Schnittlinie kontinuierlich zu. Bis zu 60 Prozent der Schnittlinie sind die vorher erwähnten Werte der Parameter konstant. Somit erreicht man, dass durch eine kontinuierliche Erhöhung der auf die Probe 4 einwirkenden Gesamtleistung vor Beendigung der Schnittlinie eine sichere Abtrennung des Dissektats vom Rest des Probenmaterials bzw. des Trägers erreicht wird. Bei der in Fig. 6 gezeigten Parametereinstellung wird auf eine explizite Bestimmung der Schneidparameter entlang der Schneidlinie verzichtet. Es wird eine möglichst zuverlässige Ablösung des Dissektats bei hoher "Über-Alles"-Schnittgeschwindigkeit angestrebt. Hier wird kein Teil der Schneidkurve ausgespart, sondern es werden Laserleistung (bzw. Apertur und Abschwächer) und Punktabstand im Endbereich der Schneidkurve kontinuierlich erhöht, um vorzeitiges Absenken oder durch Spannungen bedingtes Aufstellen des Dissektats aus der Fokuslage zu minimieren. Diese Veränderungen werden durch Klassen **x** einparametriger Funktionen beschrieben, die den Verlauf von Laserleistung und Punktabstand entlang der Schnittlinie festlegen. Die Wahl von **x** kann aufgrund typischer (bekannter bzw. vorher ermittelter) Materialeigenschaften erfolgen oder auch durch eine Art "Eichung", erfolgen. Alternativ, oder auch zusätzlich, hat es sich als hilfreich für den Anwender herausgestellt, die Wahl der richtigen Funktionsklasse **x** über eine zusätzliche Einstellgröße zu beeinflussen, die beschreibt, wie kritisch das jeweilige Material in Bezug auf die störenden Effekte wie Aufstellen, Absinken, Verkanten, oder Aufgleiten und Festkleben ist und die dann z. B. die Veränderungen der totalen Laserleistung (oder der Apertur und des Abschwächers) und der zugehörigen Punktdichte zum Ende der Schnittlinie hin vorgibt. Damit kann der Benutzer auf möglichst einfache Weise zwischen unkritischen Probenmaterialien auf der einen Seite und schwer zu separierenden Probenmaterialen auf der anderen Seite unterscheiden und den Schneidprozeß entsprechend anpassen.

In dem vereinfachten Fall der Figur 6 wird keine optische Dichte **d** entlang der Schnittlinie **I** ermittelt und verwendet, es wird aber ein optimiertes Parameterprofil **(P, D)** = **gₓ(I)** oder auch **(A, K, D, z)** = **gₓ(I)** bestimmt, wobei **gₓ** wieder Klassen von einparametrigen Funktionen sind, die den Verlauf der Parameter entlang der Schnittlinie I, besonders zum Ende hin beschreiben, um sowohl, wie weiter oben schon diskutiert, möglichst dünne Schnitte über einen möglichst großen Teil der Schnittlinie I als auch eine möglichst sichere Ablösung im kritischen Endbereich von I zu erreichen. Die Auswahl von **x** kann aufgrund typischer (bekannter bzw. vorher ermittelter) Materialeigenschaften erfolgen oder wieder durch eine Art Eichung, wie bereits in dr Beschreibung zu Figur 5 diskutiert. Alternativ, oder auch zusätzlich, hat es sich als hilfreich für den Anwender herausgestellt, die Wahl der richtigen Funktion **gₓ** über eine zusätzliche Einstellgröße zu beeinflussen, die beschreibt, wie kritisch das jeweilige Material in bezug auf die erwähnten störenden Effekte wie Verkanten, Aufgleiten, Festkleben oder Hochbiegen ist und die dann z. B. die Veränderungen der totalen Laserleistung **P** (oder **A** und **K**) und der zugehörigen Punktdichte **D** zum Ende der Schnittlinie hin vorgibt. Damit kann der Benutzer auf möglichst einfache Weise zwischen unkritischen Probenmaterialien auf der einen Seite und schwer zu separierenden Probenmaterialen auf der anderen Seite unterscheiden und den Schneidprozess entsprechend optimieren.

Auch in dem in Fig. 6 beschriebenen Schneideverfahren kann optional über Kontrastauswertung des Mikroskopbildes in verschiedenen Fokuslagen eine eventuelle Krümmung und eine allgemeine Neigung des Präparats zur optischen Achse bestimmt werden und simultan zu den Laserpulsen, ohne Verringerung der Schnittgeschwindigkeit, korrigiert werden.

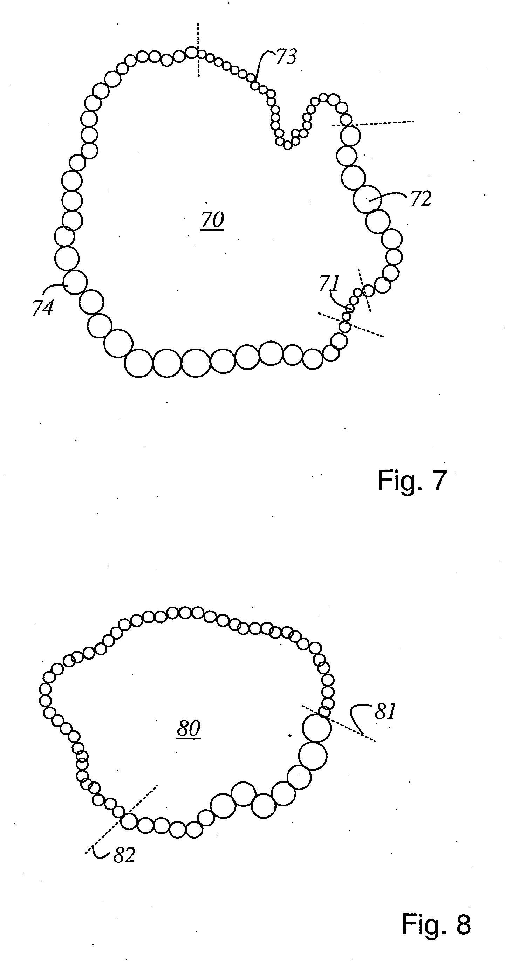

**Figur 7** zeigt eine Schnittlinie 70, innerhalb der mehrere Bereiche vorgesehen sind, in denen sich die Parameterzusammensetzung der Laserpulse auf der Probe 4 ändern. In der vorliegenden Ausführungsform ist die Schnittlinie 70 in vier Bereiche 71, 72 ,73 und 74 unterteilt. So wird z. B. im Bereich 71 und im Bereich 73 mit konstanten Parametern geschnitten. Im Bereich 72 und im Bereich 74 verändern sich die Parameter zur Erzeugung der Schnittlinie kontinuierlich. Der Benutzer markiert entweder mit Hilfe einer Maus (nicht dargestellt) auf dem Monitor 18 im Bild der Probe 4 direkt die gewünschte Schnittlinie **I** oder er gibt evtl. nur einen Suchbereich grob vor und eine Bilderkennung bestimmt vollautomatisch eine oder mehrere/alle Schnittlinien **Iᵢ** im vorgegebenen Bereich der Probe 4.

**Figur 8** zeigt eine weitere Ausführungsform zur Erstellung einer Schnittlinie 80. Die Schnittlinie hat einen Anfang, der in Figur 8 mit 81 bezeichnet ist. Der Anfang der Schnittlinie 81 fällt mit dem Ende der Schnittlinie 83 zusammen. Bis zu einer Position 82 auf der Schnittlinie wird ausgehend vom Anfang 81 der Schnittlinie mit konstanten Parametern geschnitten. Die konstanten Parameter werden in der Schnittlinie zwischen dem Anfang 81 und einer Position 82 in der Schnittlinie angewandt. Zwischen der Position 82 und dem Anfang bzw. Ende 81 der Schnittlinie werden dann die Parameter kontinuierlich variiert bzw. erhöht. Frühestens nach etwa 60 Prozent einer vollendeten Schnittlinie wird also begonnen, die Schneidparameter bis zum Ende der Schnittlinie kontinuierlich zu variieren. Während des Schneideprozesses beträgt die mittlere Breite der Schnittlinie einige µm.

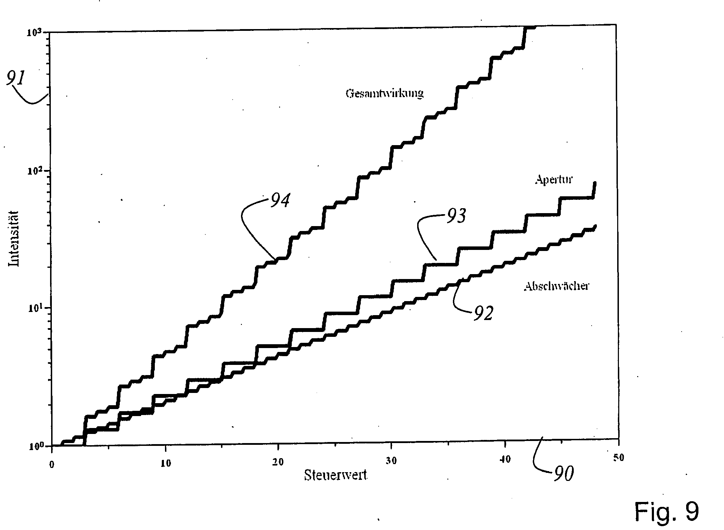

**Figur 9** zeigt die Gesamtwirkung bei gleichzeitiger Veränderung der Apertur und des Abschwächers. Auf der Abszisse 90 ist der Steuerwert in willkürlichen Einheiten aufgetragen. Auf der Ordinate 91 ist die Intensität in logarithmischen Einheiten dargestellt. Die gleichzeitige Variation von Apertur und Abschwächer ist erforderlich, um einen möglichst großen Dynamikbereich zu erreichen. Die kombinierte Ansteuerung von Abschwächer und Apertur erhöht die Auflösung bei der Leistungseinstellung. Üblicherweise sind die Blendenstufen bei der Apertur nur grob logarithmisch abgestuft. Eine Blendenstufe entspricht einer Variation der Intensität von > 30 Prozent. Der Abschwächer kann dagegen mit einer Auflösung von 7 Prozent und besser (kleinere Mikroschritte sind möglich) eingestellt werden. Durch die kombinierte simultane Ansteuerung von Apertur und Abschwächer kann eine hohe Dynamik (Gesamtdynamik ungefähr 1 : 2000) gleichzeitig bei einer Auflösung von besser als 7 Prozent (100 Stufen ä 0,928) erreicht werden. In Figur 9 ist die Variation 92 des Abschwächers mit diskreten Stufen dargestellt. Ebenso ist in Figur 9 die Variation 93 der Apertur in diskreten Stufen dargestellt, wobei, wie bereits vorstehend erwähnt, die Stufen bei der Apertureinstellung größer sind als bei der Einstellung des Abschwächers. Die aus der kombinierten Ansteuerung der Apertur und des Abschwächers sich ergebende Gesamtwirkung der Intensität ist in der Kurve 94 dargestellt. Die Kurve 94 zeigt somit in der Gesamtwirkung im Anstieg der Intensität periodische Sprünge. Während eines Schneidvorgangs werden sowohl Apertur **A** und Abschwächer **K** für den Laserstrahl 31 willkürlich verändert. Allerdings sind nicht alle Kombinationen von **A** und **K** in der Praxis unabhängig oder für eine bestimmte Anwendung sinnvoll. Im Prinzip existiert eine Vielzahl von Kombinationen von **A** und **K,** die alle zum gleichen totalen Leistungseintrag **P** in die Probe führen, in Analogie zur Fotographie führen viele Kombinationen aus Blende **B** und Belichtungszeit **t** zur gleichen Belichtung des Films. Bezeichnet **A** den Logarithmus des Aperturdurchmessers und **K** den Logarithmus der Transmission des Abschwächers, so gilt vereinfacht **P = A+K** (mit **P** auch in logarithmischen Einheiten), wodurch klar ist, dass (unendlich) viele Werte von **A** und **K** zur gleichen Summe **P** führen können. Allerdings gilt auch hier in Analogie zur Fotographie, dass das Endergebnis durchaus verschieden sein kann, wenn auch der mittlere Leistungseintrag **P** (in der Fotographie die mittlere Belichtung) gleich ist. In der Fotographie werden diese Eigenschaften durch sogenannte "Programmautomatiken" berücksichtigt, **d**. h. es werden über den nutzbaren Bereich der Belichtung die Werte von **B** und **t** in einem bestimmten Schema variiert, das jeweilige Schema wird je nach Abwendung gewechselt oder angepasst, z. **B**. ob maximale Tiefenschärfe oder ob minimale Bewegungsunschärfe gewünscht sind. Die Idee einer "Programmautomatik", also ein Schema nach dem **A** und **K** zusammen variiert werden, kann nun mit dem hier beschriebenen Verfahren und der zugehörigen Vorrichtung für eine Verbesserung der Leistungssteuerung in der Laser-Mikrodissektion genutzt werden.

Die mit Hilfe von Aperturblende und Abschwächer alleine erzielbaren Dynamikbereiche sind in der Praxis begrenzt, in einem konkreten Fall auf Werte von ca. 70:1 bzw. 30:1. Eine optimale Schneidqualität erfordert aber typischerweise die Variation der Gesamtwirkung über einen größeren Bereich. Durch simultane Veränderung von Aperturblende und Abschwächer synchron zu den Laserpulsen können auch recht große Leistungsänderungen ohne Geschwindigkeitsverlust realisiert werden, weil der Verstellweg der einzelnen Komponenten kleiner ist, als wenn die Änderung nur mit der Aperturblende und dem Abschwächer alleine realisiert werden müssten und es wird doch insgesamt ein Dynamikbereich von = 2000:1 erreicht.

Im einfachsten Fall (siehe Figur 9) werden Apertur und Abschwächer monoton über den vorgegebenen Bereich eines Steuerwertes variiert, um diesen großen Dynamikumfang zu realisieren. Allerdings ergeben sich dadurch (wie bereits oben erwähnt) unter Umständen ungleich große Wirkungsstufen. Die im Beispiel feinere Abstufung des Abschwächers gegenüber den gröber gestuften Apertur kann so nicht ausgenutzt werden.

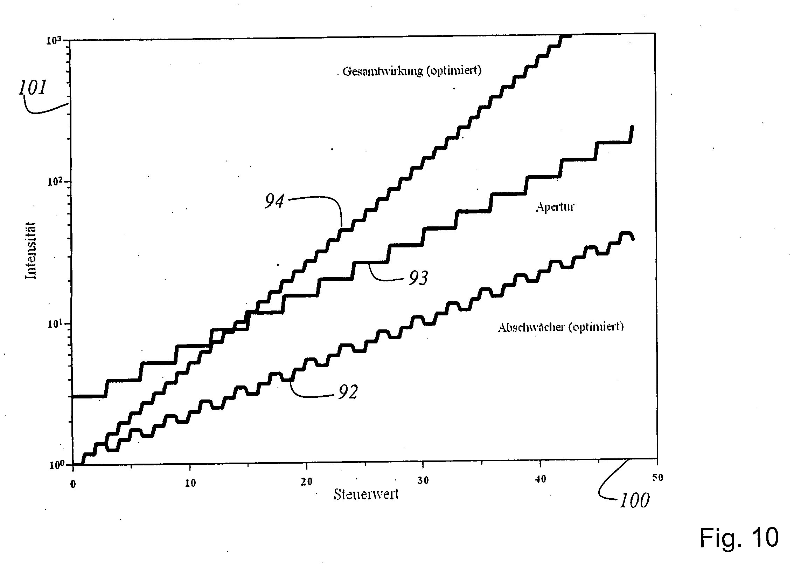

**Figur 10** zeigt ebenfalls eine Kombination der Gesamtwirkung von Abschwächer und Apertur. Dabei ist auf der Abszisse 100 der Steuerwert in willkürlichen Einheiten aufgetragen. Auf der Ordinate 101 ist die Intensität wiederum in logarithmischen Einheiten aufgetragen. Die Kurve 92 zeigt die Änderung des Abschwächers. Der Abschwächer wird dabei nicht kontinuierlich in diskreten Schritten ansteigend verändert. Der Abschwächer wird folglich so verändert, dass zunächst die Intensität in zwei Stufen ansteigt und in einer dritten Stufe wieder abfällt. Dieses Schema wird für die gesamte Verstellung des Abschwächers fortgesetzt. Wie bereits in Figur 9 gezeigt, wird die Apertur in diskreten Stufen verändert. Die aus der Kombination von sich verändernder Apertur und verändertem Abschwächer resultierende Gesamtwirkung ist in Kurve 94 dargestellt. Es ist klar ersichtlich, dass die Intensität kontinuierlich stufenweise ansteigt, wobei jede der Stufen gleich groß ist. Man kann also von einem quasi kontinuierlichen Anstieg der Gesamtwirkung sprechen. Hinzu kommt, dass sich aus der geeigneten Kombination der Verstellung von Abschwächer und Apertur eine Gesamtwirkung einstellt, die in wesentlich feineren Stufen verstellt werden kann. Durch eine optimierte Ansteuerung des Abschwächers, welche die dabei im einfachen Fall (Figur 9) entstehenden Fehler kompensiert, kann eine monotone, exponentielle Variation der Gesamtwirkung über den vollen Bereich = 2000:1 unter Erhaltung der feineren Abstufung des Abschwächers realisiert werden.

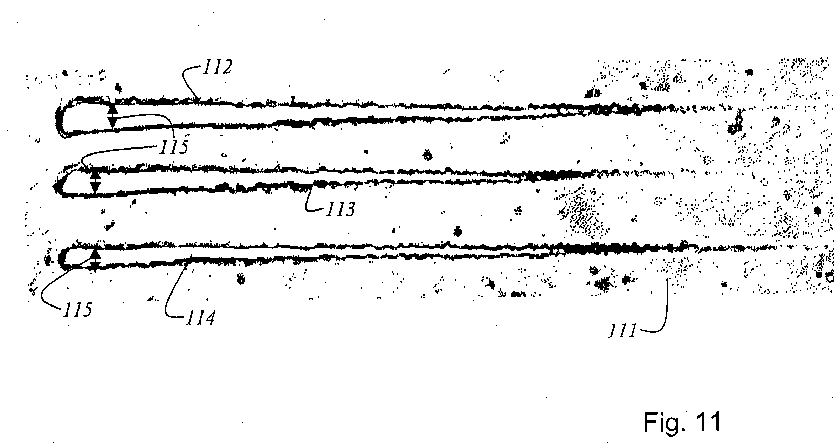

**Figur 11** zeigt die resultierenden Schnittlinien 112, 113 und 114, bei denen die Aperturblende und der Abschwächer gemeinsam nach dem in Figur 10 beschriebenen Verfahren verstellt worden sind. Jede der Schnittlinien 112, 113 und 114 ist dabei mit einen unterschiedlichen Parametersatz aus Aperturblende und Abschwächer geschnitten. Alle Schnittlinien 112, 113 und 114 zeigen eine kontinuierliche Zunahme der Schnittbreite 115. Aufgrund der Verstellung der Aperturblende und des Abschwächer nach dem in Figur 10 beschriebenen Verfahren zeigt jede der Schnittlinien 112, 113 und 114 keine Sprünge in der Schnittbreite 115. Die Schnittbreite beträgt am Ende der Schnittlinien 112, 113 oder 114 ca. 10µm bis 50 µm. Durch die Möglichkeit der Feinkorrektur der Leistungswerte hat sich auch die Verwendung einer Lochblende statt einer Irisblende als durchaus vorteilhaft herausgestellt. Eine Irisblende hat prinzipiell den Vorteil, dass die Veränderung der Aperturwerte stetig erfolgt und so nicht die "Gefahr" besteht, dass ein Laserpuls während der Verstellung auf den Raum zwischen den vorgegebenen Löchern einer Lochblende trifft und somit blockiert wird. Dagegen sind die Aperturwerte der Lochblende genauer definiert und eine Lochblende lässt sich kleiner und leicht bauen, so dass die Verstellung nur wenige ms in Anspruch nimmt und somit vollständig in der Wartezeit zwischen den Laserpulsen erfolgen kann.

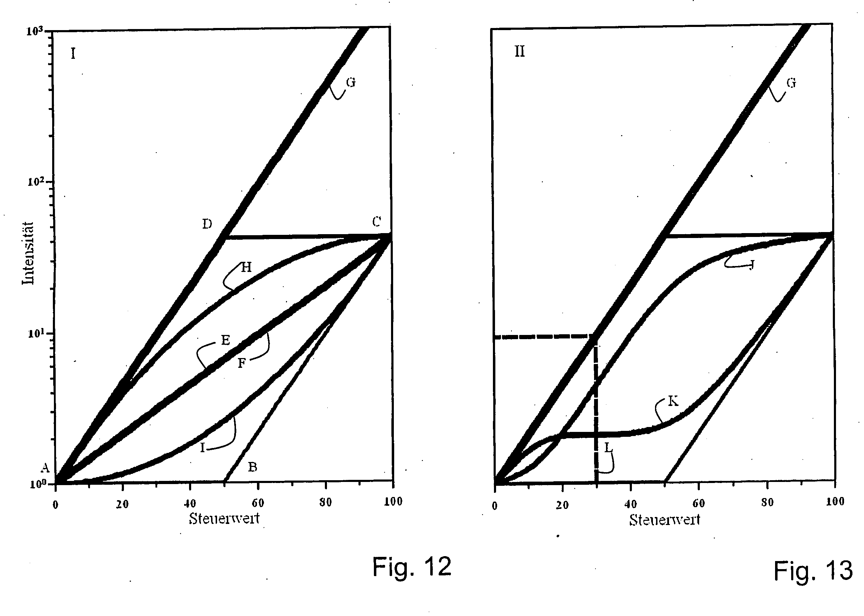

**Figur 12** erläutert die beispielhaft die Einschränkungen der möglichen Kombinationen eines Abschwächers mit Dynamikbereich 40:1 mit einer Aperturblende des gleichen Dynamikbereichs. Abschwächer und Aperturblende sind hier simultan so angesteuert werden, dass über einen Steuerwert von 0 - 100 eine streng exponentielle Variation der Gesamtleistung von 40² :1 also 1600:1 nach der Summenkurve G erfolgt.

Im einfachsten und universellsten Fall, der auch in den Figuren 9 und 10 realisiert ist, werden über den vollen Bereich des Steuerwerts sowohl Abschwächer als auch Aperturblende in gleicher Weise entsprechend den Kurven konstanter Steigung E und F variiert. Somit erfolgt keine spezielle Bevorzugung bestimmter Einstellwerte.

Es kann aber auch sinnvoll sein, z. B. über einen möglichst großen Bereich des Steuerwerts möglichst niedrige Aperturwerte zu erhalten, um eine möglichst große Tiefenschärfe und/oder auch möglichst geringe Abbildungsfehler der Schneid-Optik sicherzustellen. Umgekehrt kann es auch sinnvoll sein, eine möglichst große Apertur zu bevorzugen, um für spezielle Substrate eine möglichst hohe räumliche (laterale und axiale) Auflösung und gleichzeitig eine möglichst hohe Leistungsdichte im Fokus sicherzustellen (dadurch, dass die Ausdehnung des Fokusspots mit zunehmender Apertur abnimmt, steigt die Leistungsdichte überproportional an!). Diesen Fällen entsprechen Paarungen der Steuerkurven wie zum Beispiel H und I, wo im ersten Fall I für die Apertur und H für den Abschwächer steht, und im zweiten Fall umgekehrt.

Im allgemeinen Fall findet man, dass zur Ansteuerung im Rahmen der vorgegebenen Aufgabe alle (und nur diese!) Kurvenpaare möglich sind, die vollständig im Parallelogramm A B C D von A nach D verlaufen und paarweise symmetrisch zur Linie A bis D liegen (bzw. äquivalent dazu: deren Summe für einen bestimmten Steuerwert den vorgegebenen Wert G ergibt).

In **Figur 13** sind die Steuerkurven für Abschwächer und Apertur dargestellt, durchaus nicht nur auf Verläufe mit monotoner Variation der Krümmung beschränkt sind, sondern es sind auch Umkehrpunkte und Bereiche (annähernd) konstanten Wertes möglich. So kann gefordert sein, über einen möglichst großen Bereich um den Steuerwert von z. **B**. 30 herum (L) eine möglichst konstante Apertur entsprechend dem Verlauf K sicherzustellen. Nach den obigen Betrachtungen kann dann direkt die zugeordnete Steuerkurve J für den Abschwächer aus der Symmetrie zu A - D bzw. aus der Summenbedingung für G abgeleitet werden.

Die kombinierte Ansteuerung von Aperturblende **A** und Abschwächer **K,** insbesondere unter Verwendung der Fehlerkorrektur nach Figur 10, erfordert eine hohe Genauigkeit der eingestellten Abschwächerwerte **K**. Leider zeigen die verwendeten Abschwächer in Abhängigkeit vom Kipp-Winkel **alpha** typischerweise annähernd eine verschobene cos-förmige Charakteristik **K = f0×xcos(f1+f2×alpha)+1+f3 (f0** bis **f3** sind individuelle Parameter) mit einem Maximum und einem Minimum und nicht die gewünschte monoton exponentielle Form **K = g0×exp(-g1×alpha)**.

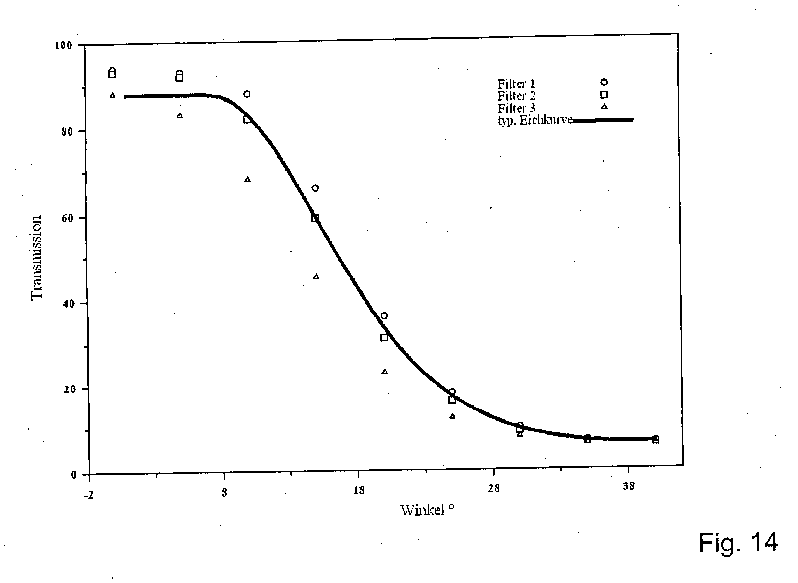

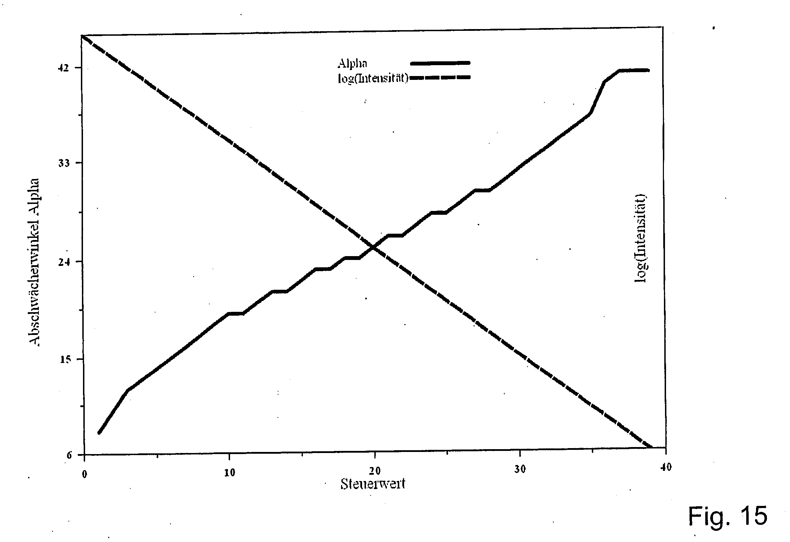

Im Sinne der Erfindung werden deshalb zur Sicherstellung der Genauigkeit Fitt- Parameter (vier oder mehr) eines individuellen Abschwächers oder bei genügend kleiner Streuung die mittleren Parameter eines Fertigungs-Loses von Abschwächern bestimmt (siehe **Fig. 14**) und im Speicherbereich des Laserkopfes hinterlegt. Durch Inversion der Fitt-Funktion kann so aus einem vorgegebenen Steuerwert der zugehörige Kippwinkel bestimmt werden und so die Charakteristik des Abschwächers "linearisiert" werden (siehe **Fig. 15**). In einem konkreten Fall kann z. B. gefordert sein, dass drei Stufen des Steuerwerts einem Faktor von 1.25 entsprechen (exponentielle Kennlinie). Dadurch ergibt sich eine exponentielle Charakteristik der Intensität mit **log10(Intensität) ∝ -0.0323×Steuerwert.**

Zur Optimierung der Schnittgeschwindigkeit erfolgen die Berechnungen und Bewegungen zeitlich "verschränkt", d.h. während die einzelnen Komponenten (Apertureinheit 14, Abschwächereinheit 16, Fokuseinheit 19, und Ablenkeinheit 40 oder x-y-Tisch 2) eine neue Position aufsuchen oder auf den Ablauf der vorgegebenen Periodendauer für die gewünschte Laserfrequenz gewartet wird, werden schon zeitaufwendige Rechnungen für die jeweils darauffolgende Position durchgeführt. Wenn dann die Rückmeldung vorliegt, dass alle Komponenten ihre Sollposition erreicht haben UND die vorgegebene Wartezeit für den Laserpuls verstrichen ist, wird der Lasertrigger ausgelöst und es werden sogleich Positionierungskommandos für die folgende Schussposition abgesetzt.

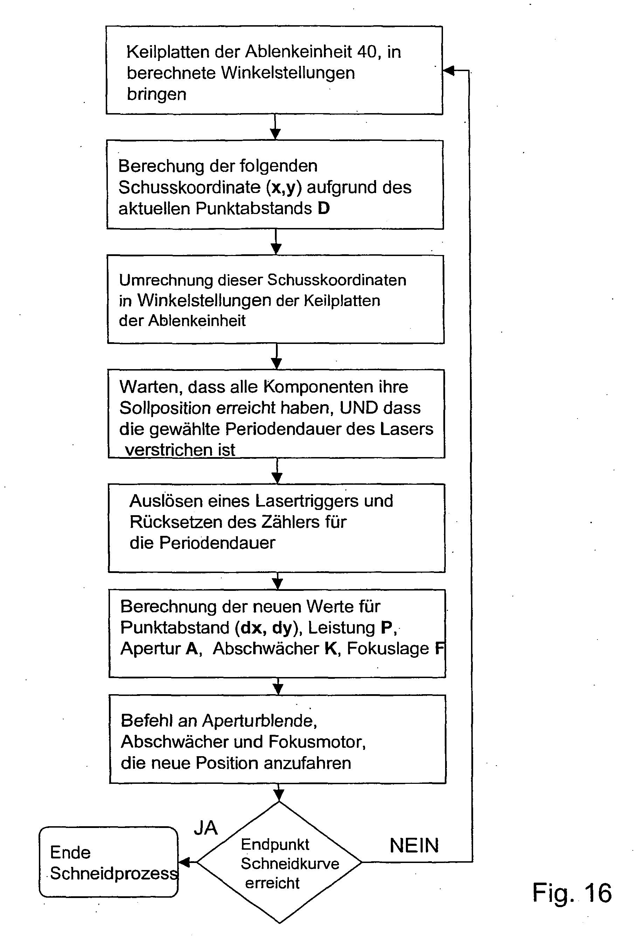

In **Figur 16** ist schematisch beispielhaft eine Programmschleife zum Erzeugen einer Schnittlinie dargestellt, die nach der folgenden Form abläuft:
1) Befehl an die Keilplatten der Ablenkeinheit 40, die zuletzt schon berechneten Winkelstellungen (**α,β**) anzufahren;
2) Berechung der folgenden Schusskoordinate (**x,y**) aufgrund des aktuellen Punktabstands **D;**
3) Umrechnung dieser Schusskoordinaten in Winkelstellungen (**α,β**) der Keilplatten der Ablenkeinheit 40 (in der Regel am zeitaufwendigsten);
4) Warten, dass alle Komponenten ihre Sollposition erreicht haben, UND dass die gewählte Periodendauer des Lasers verstrichen ist;
5) Auslösen eines Lasertriggers und Rücksetzen des Zählers für die Periodendauer;
6) Berechnung der neuen Werte für den Punktabstand (**dx, dy**), die Leistung **P,** daraus Werte für Apertur **A** und Abschwächer **K,** und evtl. auch die Fokuslage **F;**
7) Befehl an Aperturblende, Abschwächer und Fokusmotor, die neue Position anzufahren;
8) Zurück zu 1) solange der Endpunkt der Schneidkurve noch nicht erreicht wurde.

Zum Starten der Sequenz müssen die Winkelstellungen (**α,β**) für den ersten Punkt der Schnittkurve schon einmal berechnet worden sein und Apertur **A**, Abschwächer **K** und Fokuslage **F** müssen schon in die Anfangsposition für den Startpunkt der Schneidkurve gebracht werden.

Bei dem in Figur 6 dargestellten Schneideverfahren ist es im Sinne der Erfindung vorteilhaft, die Position des letzten Laserschusses am Ende der Schnittlinie zu kontrollieren und evtl. korrigierend einzugreifen. Dabei sollte der letzte Laserpuls bei der Laser-Mikrodissektion mit der höchsten Laserleistung, unmittelbar, bevor die Schneidkurve sich schließt, immer so positioniert sein, dass ein möglichst großer Bereich des Dissektats entfernt wird, um eine möglichst zuverlässige Ablösung zu gewährleisten. Wird der letzte Schuss zu weit entfernt vom Startpunkt der Schneidlinie gesetzt, besteht die Gefahr, dass das Dissektat hängen bleibt, wird der letzte Punkt zu dicht gesetzt, besteht dagegen die Gefahr, dass das Dissektat zwar nicht wie gewünscht abtrennt, sondern (wie oft beobachtet wird) schon aus der Fokusebene "herausdreht" und somit auch für den letzten Schuss "unzugänglich" macht.

Allerdings sind die Gesamtlängen der Schneidkurven, die in der Regel willkürlich vom Anwender festgelegt werden, selten ein passendes Vielfaches des Punktabstandes, insbesondere wenn der Punktabstand in den erweiterten Modi nicht konstant bleibt. Somit besteht die Erfindung darin, vor Beginn des Schneidvorganges die aus den gewählten Schneidparametern resultierende Position dieses letzten Pulses zu berechnen und durch leichte Variationen der Parameter eine vorteilhafte Lage des letzten Pulses zu erzwingen, ohne dass dadurch eine störende Unstetigkeit oder Lücke in der Schneidkurve bzw. Schnittlinie auftritt.

Durch Variation der Laserleistungsparameter (Apertur und Abschwächer) synchron zu den Laserpulsen erzielt man höchste Schnittgeschwindigkeit. Daraus ergeben sich positive Nebeneffekte, die ebenfalls den Durchsatz beim automatischen Schneiden vieler Teilbereiche maximieren.

Durch die Anpassung der Punktdichte an die jeweilige Laserleistung und die lokalen Eigenschaften der Probe kann sicher gestellt werden, dass die die einzelnen Laserschüsse einen Schnitt erzeugen. Somit ist ein von Hängenbleiben, Verkanten usw. des Dissektats verhindert oder vermieden. Auch möglich ist eine Optimierung des Impulsübertrags bei Abtrennung des interessierenden Bereichs erzielt.

Die gleichzeitige Variation von Apertur und Abschwächer erzielt einen möglichst großen Dynamikbereich.

Die kombinierte Ansteuerung von Abschwächer und Aperturblende erhöht die Auflösung bei der Leistungseinstellung.

Durch die Variation der wirksamen Laserleistung über Apertur und Abschwächer nach einem bestimmten Schema, können bestimmte Eigenschaften der Probe (innerhalb des zur Verfügung stehenden Dynamikbereichs) optimal berücksichtigen werden.

Die "Linearisierung" des Abschwächers **K** wird durch eine im Laserkopf gespeicherte, individuelle Eichkurve erzielt. Dadurch wird die typisch cos-förmige Charakteristik eines gekippten Interferenzfilters in einen korrekt exponentiellen Verlauf umgesetzt.

Ferner kann die Bestimmung der optimalen Parameter für den Schneidprozess aus einer Bildanalyse entweder vorher in einem "Eichbereich" der Probe oder unter laufender, automatischer optischer Kontrolle des Schnittergebnisses während des Schneidens erfolgen. Eventuell kann auch ein automatisches Nachschneiden bzw. Neuschneiden nicht optimal getrennter Bereiche der Probe erfolgen.

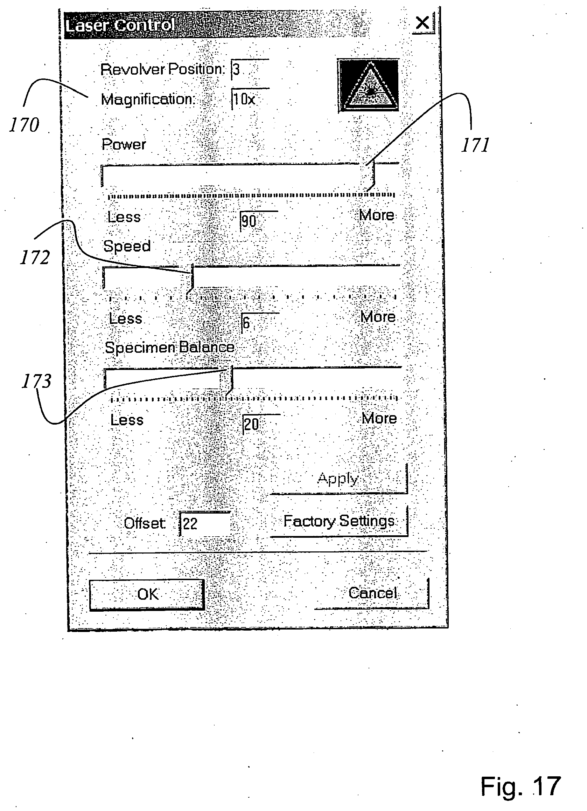

**Figur 17** zeigt eine Darstellung eines Ausschnitts aus einem Userinterface 170, über das mittels mindestens eines Sliders 171, 172, 173 die kontinuierliche Veränderung der Parameter vor dem Schließen der geschlossenen Schnittlinie eingestellt wird. Das Userinterface 170 wird auf dem Monitor 18 dem Benutzer dargestellt. Mit dem ersten Slider 171 kann die Gesamtleistung der auf die Probe auftreffenden Laserpulse eingestellt werden. Die Gesamtleistung ergibt sich, wie bereits beschrieben, aus der geeigneten Kombination der Verstellung von Abschwächer und Apertur. Mit dem zweiten Slider 172 kann die Geschwindigkeit eingestellt werden, mit der die Schnittlinien in der Probe gelegt werden sollen. Entsprechend hierzu wird dann die Repitionsrate der Laserpulse eingestellt. Mit dem dritten Slider 173 kann eingestellt werden, wie stark sich die Parameter zum Ende der Schnittlinie hin ändern sollen.

## Patentansprüche

1. Laser-Mikrodissektionsverfahren, mit dem ein Dissektat aus einer biologischen Probe (4), welche auf einem planaren Träger (3) aufgebracht ist, mittels Laserpulsen eines Lasers (22) entlang einer geschlossenen Schnittlinie (70) ausgeschnitten wird,
**dadurch gekennzeichnet,**
**dass** in Abhängigkeit von probenabhängigen Größen die Parameter, welche die Laserpulse und die Schnittlinie (70) bestimmen, synchron zu den Laserpulsen entlang der geschlossenen Schnittlinie (70) zumindest in einem mehrere Laserpulse umfassenden Bereich (71-74) dieser Schnittlinie (70) kontinuierlich verändert werden.

2. Verfahren nach Anspruch 1, **dadurch gekennzeichnet, dass** die Grössen für die kontinuierliche Veränderung der Parameter entlang der geschlossenen Schnittlinie durch eine Bildverarbeitung gewonnen werden.

3. Verfahren nach Anspruch 1 oder 2, **dadurch gekennzeichnet, dass** die Größen die Probendicke, die Schieflage des Probenträgers, die Probentextur und die Probenfärbung umfassen.

4. Verfahren nach einem der Ansprüche 1 bis 3, **dadurch gekennzeichnet, dass** die Parameter, die die Laserpulse und die Schnittlinien bestimmen, lediglich vor einem Schließen der geschlossenen Schnittlinie kontinuierlich verändert werden.

5. Verfahren nach einem der Ansprüche 1 bis 4, **dadurch gekennzeichnet, dass** die Parameter mittels einer zentralen Recheneinheit (16) ermittelt werden, und dass von der zentralen Recheneinheit (16) Steuersignale an einzelne Elemente eines optischen Systems geliefert werden.

6. Verfahren nach Anspruch 5, **dadurch gekennzeichnet, dass** die Laserpulse, bevor sie auf die biologische Probe treffen, das optische System durchlaufen, wobei die Parameter der Laserpulse hinsichtlich einer Apertur, einer Abschwächung, einer Dichte der einzelnen Laserpunke in der Schnittlinie und einer Fokuslage der Laserpulse verändert werden.

7. Verfahren nach Anspruch 6, **dadurch gekennzeichnet, dass** die Apertur und der Abschwächer gleichzeitig variiert werden.

8. Verfahren nach Anspruch 6, **dadurch gekennzeichnet, dass** die Variation der Apertur und des Abschwächers synchron zu den Laserpulsen für höchste Schnittgeschwindigkeit erfolgt.

9. Verfahren nach Anspruch 6, **dadurch gekennzeichnet, dass** die Dichte der einzelnen Laserpunke innerhalb der Schnittlinie hinsichtlich der jeweiligen Laserleistung und der lokalen Eigenschaften der Probe angepasst werden.

10. Vorrichtung zur Laser-Mikrodissektion umfassend ein Mikroskop (1) mit mindestens einem eine optische Achse (10) definierenden Objektiv (9), einen gepulsten Laser (22), der einen Laserstrahl (31) aussendet, der über das Objektiv (9) entlang der optischen Achse (10) auf eine Probe (4) gerichtet ist und eine geschlossene Schnittlinie beschreibt, **dadurch gekennzeichnet, dass** alle in der optischen Achse (10) angeordneten Elemente, die die Parameter der Laserpulse und der Schnittlinie bestimmen, an eine zentrale Recheneinheit (16) angeschlossen sind, mit der in Abhängigkeit von probenabhängigen Größen die Parameter, welche die Laserpulse und die Schnittlinie (70) bestimmen, synchron zu den Laserpulsen entlang der geschlossenen Schnittlinie (70) zumindest in einem mehrere Laserpulse umfassenden Bereich (71-74) dieser Schnittlinie (70) kontinuierlich veränderbar sind.

11. Vorrichtung nach Anspruch 10, **dadurch gekennzeichnet, dass** die zentrale Recheneinheit (16) mittels Bildverarbeitung eine kontinuierliche Veränderung der Parameter entlang der geschlossenen Schnittlinie durch eine abgestimmte Verstellung der Elemente erzielt.

12. Vorrichtung nach Anspruch 10, **dadurch gekennzeichnet, dass** die zentrale Recheneinheit (16) die Parameter, die die Laserpulse und die Schnittlinien bestimmen, lediglich vor einem Schliessen der geschlossenen Schnittlinie kontinuierlich verändert.

13. Vorrichtung nach einem der Ansprüche 10 bis 12, **dadurch gekennzeichnet, dass** die Elemente, die die Parameter der Laserpulse und der Schnittlinie bestimmen, eine X/Y - Verschiebeeinheit, eine Apertureinheit (14), eine Abschwächereinheit (16), eine Fokuseinheit (19), einen UV-Laser (22) und eine Ablenkeinheit (40) umfasst.

14. Vorrichtung nach einem der Ansprüche 10 bis 12, **dadurch gekennzeichnet, dass** die zentrale Recheneinheit (16) entsprechende Verstellsignale an die Elemente liefert.

15. Vorrichtung nach einem der Ansprüche 10 bis 14, **dadurch gekennzeichnet, dass** ein Monitor (18) vorgesehen ist, der ein UserInterface (170) wiedergibt, wobei das UserInterface (170) einen Slider (171, 172 173) umfasst, mit dem die kontinuierliche Veränderung der Parameter vor dem Schliessen der geschlossenen Schnittlinie bestimmbar ist.

16. Vorrichtung nach Anspruch 13, **dadurch gekennzeichnet, dass** die X/Y - Verschiebeeinheit einen X/Y - Tisch (2) und eine Steuereinheit (15) umfasst.

17. Vorrichtung nach Anspruch 13, **dadurch gekennzeichnet, dass** die Apertureinheit (14) eine verstellbare Lochblende oder Irisblende und eine Steuereinheit (15) umfasst.

18. Vorrichtung nach Anspruch 13, **dadurch gekennzeichnet, dass** die Abschwächereinheit (16) einen Filter und eine Steuereinheit (15) umfasst.

19. Vorrichtung nach Anspruch 13, **dadurch gekennzeichnet, dass** der UV-Laser (22) direkt mit der Recheneinheit (16) verbunden ist.

20. Vorrichtung nach Anspruch 13, **dadurch gekennzeichnet, dass** die Ablenkeinheit (40) ein Keilplattenpaar und eine Steuereinheit (15) umfasst.

## Claims

1. Laser microdissection process with which dissected material from a biological sample (4) which is applied to a planar slide (3) is excised along a closed cutting line (70) by means of laser pulses from a laser (22),
**characterised in that**
as a function of sample-dependent variables the parameters that determine the laser pulses and the cutting line (70) are continuously varied synchronously with the laser pulses along the closed cutting line (70), at least in a region (71-74) of this cutting line (70) that comprises a plurality of laser pulses.

2. Process according to claim 1, **characterised in that** the variables for continuously varying the parameters along the closed cutting line are obtained by image processing.

3. Process according to claim 1 or 2, **characterised in that** the variables comprise the sample thickness, the inclined position of the sample slide, the sample texture and the staining of the sample.

4. Process according to any one of claims 1 to 3, **characterised in that** the parameters that determine the laser pulses and the cutting lines are continuously varied only before the closed cutting line is closed.

5. Process according to any one of claims 1 to 4, **characterised in that** the parameters are determined by means of a central computing unit (16) and **in that** control signals are delivered to individual elements of an optical system by the central computing unit (16).

6. Process according to claim 5, **characterised in that** before they strike the biological sample the laser pulses pass through the optical system, the parameters of the laser pulses being varied in terms of an aperture, an attenuation, a density of the individual laser points in the cutting line and a focal position of the laser pulses.

7. Process according to claim 6, **characterised in that** the aperture and the attenuator are varied simultaneously.

8. Process according to claim 6, **characterised in that** the variation of the aperture and of the attenuator takes place synchronously with the laser pulses for maximum cutting speed.

9. Process according to claim 6, **characterised in that** the density of the individual laser points within the cutting line is adapted with respect to the respective laser power and the local properties of the sample.

10. Apparatus for laser microdissection comprising a microscope (1) having at least one objective (9) defining an optical axis (10), a pulsed laser (22) which emits a laser beam (31) that is directed onto a sample (4) via the objective (9) along the optical axis (10), and describes a closed cutting line, **characterised in that** all the elements arranged in the optical axis (10) which determine the parameters of the laser pulses and of the cutting line are connected to a central computing unit (16) with which as a function of sample-dependent variables the parameters that determine the laser pulses and the cutting line (70) are continuously variable synchronously with the laser pulses along the closed cutting line (70) at least in a region (71-74) of this cutting line (70) that comprises a plurality of laser pulses.

11. Apparatus according to claim 10, **characterised in that**, using image processing, the central computing unit (16) achieves continuous variation of the parameters along the closed cutting line by a balanced displacement of the elements.

12. Apparatus according to claim 10, **characterised in that** the central computing unit (16) continuously varies the parameters that determine the laser pulses and the cutting lines, only before the closed cutting line is closed.

13. Apparatus according to any one of claims 10 to 12, **characterised in that** the elements that determine the parameters of the laser pulses and of the cutting line comprise an X/Y displacement unit, an aperture unit (14), an attenuator unit (16), a focussing unit (19), a UV laser (22) and a deflection unit (40).

14. Apparatus according to any one of claims 10 to 12, **characterised in that** the central computing unit (16) delivers corresponding adjustment signals to the elements.

15. Apparatus according to one of claims 10 to 14, **characterised in that** a monitor (18) is provided that reproduces a User Interface (170), the User Interface (170) comprising a Slider (171, 172, 173) with which the continuous variation of the parameters can be determined before the closed cutting line is closed.

16. Apparatus according to claim 13, **characterised in that** the X/Y displacement unit comprises an X/Y table (2) and a control unit (15).

17. Apparatus according to claim 13, **characterised in that** the aperture unit (14) comprises an adjustable pinhole diaphragm or iris diaphragm and a control unit (15).

18. Apparatus according to claim 13, **characterised in that** the attenuator unit (16) comprises a filter and a control unit (15).

19. Apparatus according to claim 13, **characterised in that** the UV laser (22) is directly connected to the computer unit (16).

20. Apparatus according to claim 13, **characterised in that** the deflection unit (40) comprises a pair of wedge plates and a control unit (15).

## Revendications

1. Procédé de microdissection au laser par lequel de la matière disséquée provenant d'un échantillon biologique (4) qui est appliquée sur un support plan (3) est excisée le long d'une ligne de coupe fermée (70) au moyen d'impulsions laser provenant d'un laser (22),
**caractérisé en ce que**
en fonction de variables dépendantes de l'échantillon, les paramètres qui déterminent les impulsions laser et la ligne de coupe (70) sont changées de manière continue en synchronisation avec les impulsions laser le long de la ligne de coupe fermée (70), au moins dans une région (71 à 74) de cette ligne de coupe (70) qui comporte une pluralité d'impulsions laser.

2. Procédé selon la revendication 1, **caractérisé en ce que** les variables pour changer de manière continue les paramètres le long de la ligne de coupe fermée sont obtenues par traitement d'image.

3. Procédé selon la revendication 1 ou 2, **caractérisé en ce que** les variables comportent l'épaisseur de l'échantillon, la position inclinée du support d'échantillon, la texture de l'échantillon et la coloration de l'échantillon.

4. Procédé selon l'une des revendications 1 à 3, **caractérisé en ce que** les paramètres qui déterminent les impulsions laser et les lignes de coupe sont changés de manière continue uniquement avant que la ligne de coupe fermée soit fermée.

5. Procédé selon l'une des revendications 1 à 4, **caractérisé en ce que** les paramètres sont déterminés au moyen d'une unité de calcul centrale (16) et **en ce que** des signaux de commande sont délivrés à des éléments individuels d'un système optique par l'unité de calcul centrale (16).

6. Procédé selon la revendication 5, **caractérisé en ce qu'**avant qu'elles frappent l'échantillon biologique, les impulsions laser passent à travers le système optique, les paramètres des impulsions laser étant changés en termes d'ouverture, d'atténuation, de densité des points laser individuels dans la ligne de coupe et de position focale des impulsions laser.

7. Procédé selon la revendication 6, **caractérisé en ce que** l'ouverture et l'atténuateur sont changés de manière simultanée.

8. Procédé selon la revendication 6, **caractérisé en ce que** la variation de l'ouverture et de l'atténuateur ont lieu en synchronisation avec les impulsions laser pour une vitesse de coupe maximale.

9. Procédé selon la revendication 6, **caractérisé en ce que** la densité des points laser individuels dans la ligne de coupe est adaptée par rapport à la puissance du laser et aux propriétés locales de l'échantillon.

10. Appareil de microdissection au laser comportant un microscope (1) ayant au moins un objectif (9) définissant un axe optique (10), un laser pulsé (22) qui émet un faisceau laser (31) qui est dirigé sur un échantillon (4) via l'objectif (9) le long de l'axe optique (10), et décrit une ligne de coupe fermée, **caractérisé en ce que** tous les éléments agencés dans l'axe optique (10) qui déterminent les paramètres des impulsions laser et de la ligne de coupe sont reliés à une unité de calcul centrale (16) avec laquelle, en fonction de variables dépendantes de l'échantillon, les paramètres qui déterminent les impulsions laser et la ligne de coupe (70) sont changés de manière continue en synchronisation avec les impulsions laser le long de la ligne de coupe fermée (70) au moins dans une région (71 à 74) de cette ligne de coupe (70) qui comporte une pluralité d'impulsions laser.

11. Appareil selon la revendication 10, **caractérisé en ce que**, en utilisant un traitement d'image, l'unité de calcul centrale (16) obtient une variation continue des paramètres le long de la ligne de coupe fermée par un déplacement équilibré des éléments.

12. Appareil selon la revendication 10, **caractérisé en ce que** l'unité de calcul centrale (16) fait varier de manière continue les paramètres qui déterminent les impulsions laser et les lignes de coupe, uniquement avant que la ligne de coupe fermée soit fermée.

13. Appareil selon l'une des revendications 10 à 12, **caractérisé en ce que** les éléments qui déterminent les paramètres des impulsions laser et la ligne de coupe comportent une unité de déplacement X/Y, une unité d'ouverture (14), une unité d'atténuation (16), une unité de focalisation (19), un laser UV (22) et une unité de déviation (40).

14. Appareil selon l'une des revendications 10 à 12, **caractérisé en ce que** l'unité de calcul centrale (16) délivre aux éléments des signaux de réglage correspondants.

15. Appareil selon l'une des revendications 10 à 14, **caractérisé en ce qu'**un moniteur (18) est prévu, lequel reproduit une interface d'utilisateur (170), l'interface d'utilisateur (170) comportant un curseur (171, 172, 173) avec lequel la variation continue des paramètres peut être déterminée avant que la ligne de coupe fermée soit fermée.

16. Appareil selon la revendication 13, **caractérisé en ce que** l'unité de déplacement X/Y comporte une table X/Y (2) et une unité de commande (15).

17. Appareil selon la revendication 13, **caractérisé en ce que** l'unité d'ouverture (14) comporte un obturateur perforé réglable ou un obturateur à iris et une unité de commande (15).

18. Appareil selon la revendication 13, **caractérisé en ce que** l'unité d'atténuation (16) comporte un filtre et une unité de commande (15).

19. Appareil selon la revendication 13, **caractérisé en ce que** le laser UV (22) est directement relié à l'unité de calcul (16).

20. Appareil selon la revendication 13, **caractérisé en ce que** l'unité de déviation (40) comporte une paire de plaques à clavette et une unité de commande (15).
